Europäisches Patentamt

European Patent Office

Office européen des brevets

(11) Publication number: **0 398 642**
**A1**

(12) **EUROPEAN PATENT APPLICATION**

(21) Application number: **90305215.7**

(22) Date of filing: **15.05.90**

(51) Int. Cl.⁵: **G02F 1/1341**

(30) Priority: **19.05.89 JP 126163/89**

(43) Date of publication of application:
**22.11.90 Bulletin 90/47**

(84) Designated Contracting States:
**DE FR GB**

(71) Applicant: **International Business Machines Corporation**
**Old Orchard Road**
**Armonk, N.Y. 10504(US)**

Applicant: **KABUSHIKI KAISHA TOSHIBA**
**72, Horikawa-Cho Saiwai-ku**
**Kawasaki-shi Kanagawa-ken(JP)**

(72) Inventor: **Terada, Kenji**
**34-104, 14ban, Yoshimi 3-chome**
**Moriyama-shi, Shiga-ken(JP)**
Inventor: **Shohji, Masato**
**202 Marinhaimu, 22ban 3goh, Nakahara,**
**Isogo-ku**
**Yokohama-shi, Kanagawa-ken(JP)**

(74) Representative: **Harris, Ian Richard**
**IBM United Kingdom Limited Intellectual**
**Property Department Hursley Park**
**Winchester, Hants. SO21 2JN(GB)**

(54) **Liquid crystal display and manufacturing method.**

(57) A liquid crystal display and method of manufacture are provided wherein the liquid crystal seal (12) is modified so as to surround the liquid crystal injection inlet (13, 15) enabling liquid crystal material to be injected into the liquid crystal cell with the cell in a horizontal position and a short ring (18) protecting switching elements (21) in the display from damage to be removed after injection of the liquid crystal material and attachment of a polariser.

FIG. 4

## LIQUID CRYSTAL DISPLAY AND MANUFACTURING METHOD

The invention relates to a liquid crystal display and a manufacturing method thereof.

For the past several years, liquid crystal displays have been growing in use in applications such as word processors, televisions and the like as a display means suitable for incorporation in smaller, lighter devices.

Recently, there has been a great demand for display devices in these applications to have larger pictures and higher picture quality, and demands have increased for commercialisation of the active matrix type liquid crystal display, in which a larger area and higher density are possible.

However, such active matrix type liquid crystal displays of larger area and higher density are being researched and developed based on the conventional small-sized low-density liquid crystal display. Unfortunately, various problems are caused by the differences between the two types of display technology.

Examples of such problems in the display manufacturing process are described below.

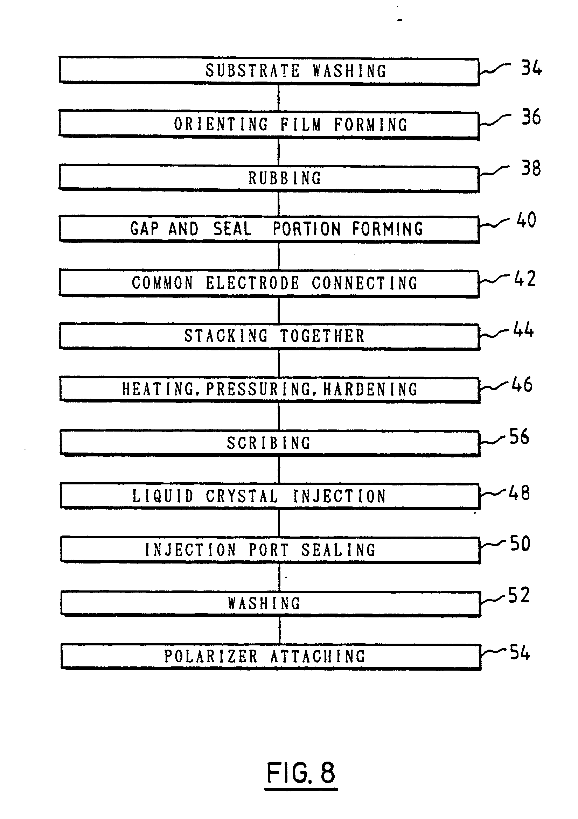

A manufacturing process will be described with reference to Figure 8 which is a manufacturing process diagram for a liquid crystal cell of a conventional active matrix type liquid crystal display.

First, two glass substrates for composing the active matrix of the liquid crystal display are washed (34).

Then, a molecule-orienting film is formed on each of the glass substrates (36), and an orientation treatment such as a rubbing method is applied (38) on the surfaces.

Then, a sealing member is formed (40) with an opening forming an injection port for the injection of liquid crystal material into the gap or space between the first and second substrates. One of the glass substrates (1) has an electrode (2) for every picture element, and the other glass substrate (3) has a transparent electrode on one surface. These electrodes are connected (42) through a common electrode.

These two glass substrates are stacked together (44) and heated and pressurised under specified conditions to harden the sealing member (46).

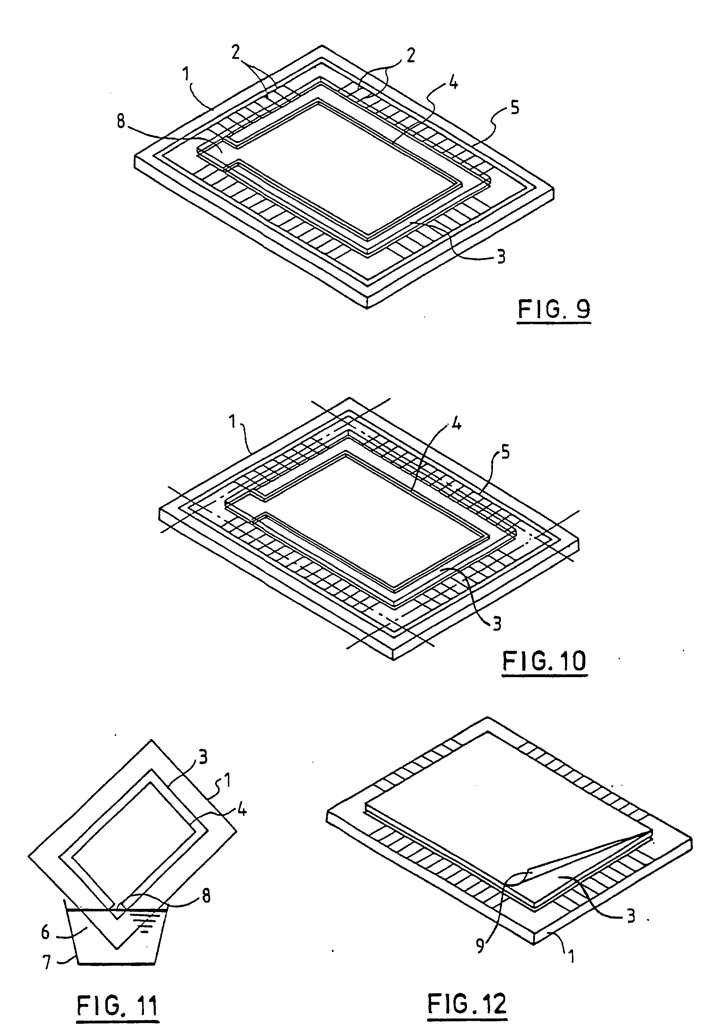

Figure 9 shows a part-finished product which has been processed through steps 34 to 46.

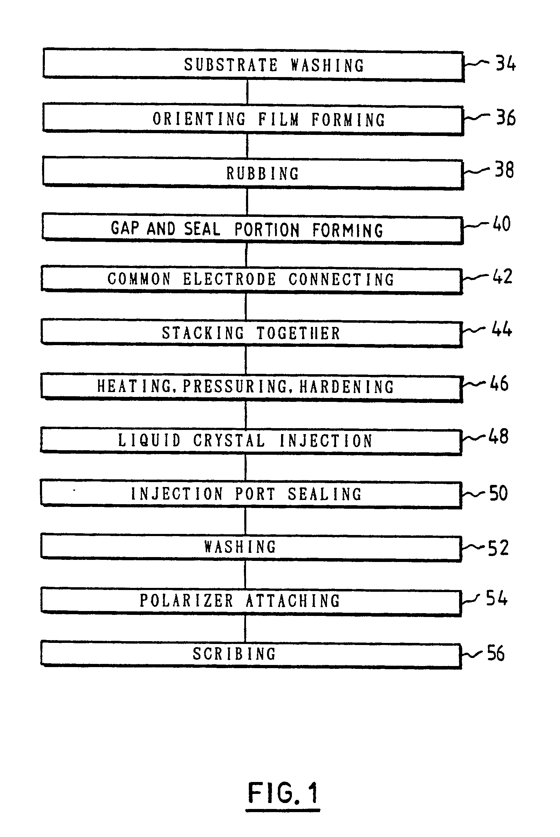

In figure 9, 1 designates a first glass substrate with many electrodes 2 formed vertically and horizontally, and 3 designates a second glass substrate with a transparent electrode formed. 4 designates a sealing member and 5 designates a shorting ring. The shorting ring 5 shorts signal portions and gate portions of switching transistors formed on the first glass substrate 1 to prevent the switching transistors from being damaged by static electricity produced in each of the above manufacturing steps.

As shown by the broken lines in Figure 10, the shorting ring 5, connected to an outer edge portion of the first glass substrate 1, is cut off together with the outer edge portion of the first glass substrate 1 itself. This step is called the scribing step (56).

Then, as shown in Figure 11, a liquid crystal injection port 8, provided at the corner of the glass substrates 1 and 3, is immersed in a vessel 7, containing a liquid crystal material 6, the glass substrates being stacked together nearly perpendicularly to the liquid crystal surface, to inject the liquid crystal material into the space between them (48). After the liquid injection port 8 has been sealed (50), this part is washed (52), and finally a polariser is attached (54).

In such a manufacturing process, the shorting ring prevents the switching transistors from being damaged by static electricity generated by the manufacturing steps. However, before injection of the liquid crystal material, it is necessary to remove the corner section of the glass substrates which would be heavily stained with liquid crystal material and to decrease the area of the glass substrates to facilitate the immersion of the substrate into the vessel 7. This is done by scribing the first glass substrate in the position where the shorting ring is connected to remove the shorting ring.

Therefore, in the subsequent steps, the shorting ring is no longer in place and the signal portions and the gate portions of the switching transistors are insulated. For this reason, if static electricity is produced by the subsequent steps (step 48 and after) the switching transistors can be damaged. For example, the polariser has a protective film attached to its surface before being attached to the display, but the protective film 9 must be peeled off after the polariser has been attached in step 54, as shown in Figure 12. This peeling off can produce a large quantity of static electricity which may cause the switching transistors to become defective.

In such a manufacturing process, the liquid crystal material is injected in step 48 by a so-called perpendicular method. When the liquid crystal injection port is immersed, not only the liquid crystal injection port, but the whole corner sections of the glass substrates around the port are also immersed. Therefore, the oil, dust, etc. which may be attached to the corner sections of the glass substrates can become dissolved in the liquid crystal material in the vessel, and the liquid crystal material therefore gradually becomes contaminated and thus deteriorates with use. Therefore the liquid crystal material in the vessel must be replaced after a certain amount of use.

In addition, since the whole corner section of the display is immersed in the liquid crystal material, some part of the liquid crystal material, instead of being injected into the space between the glass substrates through the liquid crystal injection port, sticks to the surface of the corner section of the glass substrates.

Thus, in the manufacturing process described above, a large quantity of liquid crystal is lost by contamination, deterioration, or sticking to useless parts of the glass.

Manufacturing such a large-area and high-density active matrix type liquid crystal display by the conventional method produces static electricity that can damage the switching transistors. In addition, there is a problem of a large quantity of liquid crystal material being lost uselessly by contamination and deterioration or sticking to the useless sections of the display.

It is an object of this invention to provide a liquid crystal display and a manufacturing method thereof which can be protected during the entire manufacturing process from damage to the switching transistors due to static electricity produced by the manufacturing process.

It is a further object of the invention to avoid waste of the liquid crystal material during the manufacturing process.

Therefore in accordance with the invention there is provided a liquid crystal display assembly comprising: a first substrate; a second substrate, partially overlying the first substrate; a sealing member defining a space for liquid crystal material between the first and second substrates; and characterised by a pool for injection of the liquid crystal material, the pool being defined by an extension of the sealing member over a region of the first substrate not covered by the second substrate and the pool connecting with the space between the first and second substrates. Therefore a sealing member provided between the first and second substrates specifies a liquid crystal material filling area and forms an inlet for injecting the liquid crystal material into the space between the substates. The sealing member is extended outside the bounds of the second substrate but within the bounds of the first substrate so as to surround the inlet forming the pool.

Generally, in an active matrix liquid crystal display, a so-called array substrate has switching elements such as thin film transistors attached to it and has larger area than the opposing substrate, due to the necessity to form electrodes for connection with external signal lines or control lines.

Therefore, according to a preferred feature of the invention the first substrate has a plurality of switching elements attached thereto.

During the manufacturing process of a liquid crystal display it is necessary to prevent the switching elements from being damaged. Therefore in a preferred form of the invention the display assembly comprises a conducting member interconnecting the switching elements for short-circuiting the switching elements.

According to a further preferred feature of the invention the first substrate and/or the second substrate are transparent.

According to another aspect of the invention there is provided a liquid crystal display derived from a liquid crystal display assembly as described above and further comprising liquid crystal material in the space between the first substrate and the second substrate.

Thus the invention also provides a liquid crystal display comprising: a first substrate; a second substrate partially overlying the first substrate; a sealing member defining a space for liquid crystal material between the first and second substrates; liquid crystal material in the space between the first and second substrates; characterised by a pool defined by an extension of the sealing member over the region of the first substrate not covered by the second substrate, the pool connecting with the space between the first and second substrates.

According to yet another aspect of the invention there is provided a method of manufacture for a liquid crystal display described above comprising the step of injecting the liquid crystal material into the space between the first and second substrates with the first and second substrates in a substantially horizontal position.

In a preferred form of this aspect of the invention the injection comprises: placing the display assembly in a vacuum with the first and second substrates in a substantially horizontal position; placing a predetermined amount of liquid crystal material into the pool; removing the vacuum, the liquid crystal material thereby being urged into the space between the first and second substrates.

The vacuum pressure preferably should be less than 5 Torr i.e. low enough to ensure that the liquid crystal material is adequately forced into the space between the substrates on the restoration of atmospheric pressure.

According to another preferred feature the method comprises the step of removing the conducting member interconnecting the switching elements after the injection of the liquid crystal material.

Thus the invention also provides a method of manufacture for a liquid crystal display comprising the steps of: forming switching elements on a first substrate; forming a conducting member on the first substrate, the conducting member interconnecting the switching elements; forming a sealing member on the first substrate, the sealing member defining a space for liquid crystal material and a pool connecting with the space; stacking a second substrate onto the first substrate, the second substrate covering the space for the liquid crystal material and leaving the pool at least partially uncovered; injecting liquid crystal material into the space defined by the sealing member with the first and second substrates in a substantially horizontal position; removing the conducting member.

In a preferred form of the invention the step of horizontally injecting the liquid crystal material into the space comprises: placing the stacked first and second substrates in a vacuum in a substantially horizontal position; placing a predetermined amount of liquid crystal material into the pool; removing the vacuum, the liquid crystal material thereby being urged into the space between the first and second substrates.

According to another preferred feature of the invention the method comprises the steps of electrically connecting the conducting member to a grounding portion of a device for forming the sealing member prior to forming the sealing member on the first substrate. This is because when forming a sealing member on such an array substrate, it is necessary to prevent the switching elements from being damaged

In a preferred form of the invention the device for forming the sealing member is a screen printer, and the conducting member is connected to a printing stage of the screen printer.

According to yet another preferred feature of the invention the method comprises the step of attaching a polariser to the assembly and the conducting member is removed after the step of attaching the polariser.

The injection of liquid crystal material can therefore be made by a horizontal method by use of the liquid crystal pool provided on the first substrate. The causality between the liquid crystal injection step and the scribing step is eliminated and the scribing process can be made the final step in the manufacturing process. Thus, damage of the switching transistors is prevented. Also, the injection of liquid crystal material can be effected by placing only the necessary quantity of liquid crystal material in the liquid crystal pool. Thus, the contamination and deterioration of the liquid crystal material due to the vertical injection system is completely eliminated, sticking of the liquid crystal to useless parts of the substrates is eliminated and waste of liquid crystal material is prevented.

An embodiment of this invention will be hereinafter explained in detail with reference to the following drawings wherein, Figures 1 to 7 relate to the invention and Figures 8 to 12 relate to the prior art as described above, specifically:

Figure 1 is a flow diagram showing a manufacturing process of a liquid crystal cell for a large-area high-density active matrix type liquid crystal display in accordance with an embodiment of the invention;

Figure 2 is a perspective view showing the connection of an array substrate and a printing stage when a sealing member is formed by use of a screen printer;

Figure 3 is a side view showing the forming of the sealing member using the screen printer;

Figure 4 is an enlarged perspective view of a liquid crystal pool and its vicinity in accordance with the embodiment of the invention;

Figure 5 is a perspective view showing a display assembly, which is a part-finished liquid crystal display of the active matrix type, in accordance with the embodiment of the invention;

Figure 6 is a perspective view illustrating the horizontal injection of liquid crystal material during a manufacturing process in accordance with the embodiment of the invention;

Figure 7 is a perspective view showing the appearance of a liquid crystal cell in the liquid crystal display in accordance with the embodiment of the invention; and

Figure 8 is a flow diagram illustrating a prior art manufacturing process of a conventional active matrix type liquid crystal display,

Figure 9 is a perspective view showing a conventional part-finished display;

Figure 10 is a diagram illustrating the scribing process of the prior art;

Figure 11 is a diagram illustrating a prior art perpendicular method of injecting liquid crystal material during manufacturing of the conventional liquid crystal cell; and

Figure 12 is a diagram illustrating the step of peeling off the protective film from a polariser known from the prior art.

Figure 1 is a flow diagram showing a manufacturing process for a liquid crystal cell of a larger-area and high-density active matrix type liquid crystal display in accordance with an embodiment of this invention.

According to an embodiment of the invention two glass substrates or layers, one having a larger area than the other are prepared to make up the liquid crystal display. On one surface of the first glass substrate, having the larger area (which will be referred to as the array substrate), a number of electrodes are provided vertically and horizontally, and at each intersection a switching transistor such as thin-film transistor is formed. On one surface of the second glass substrate, having the smaller area (which will be referred to as the opposite substrate) a transparent common electrode is formed.

The array substrate and the opposite substrate are first cleaned (34).

Then, on both substrates, molecule orienting films are formed (36) and an orientation treatment such as a rubbing method is applied (38) on their surfaces.

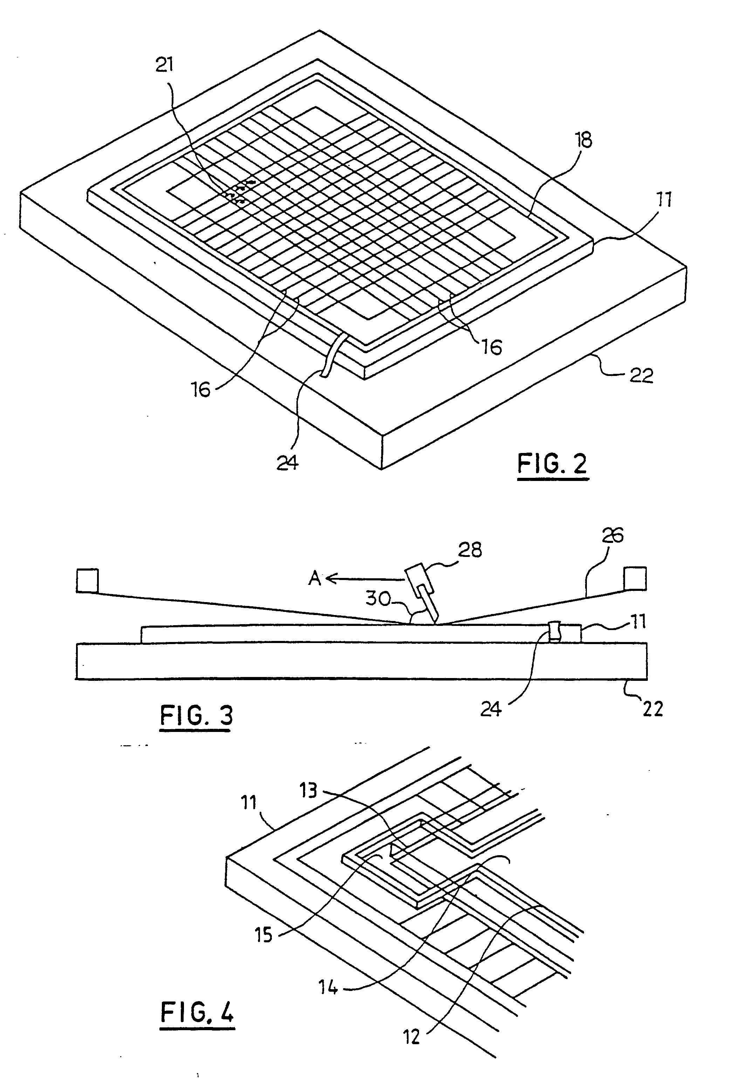

Then, on the electrode forming surface of the array substrate a sealing member is formed (40) defining a gap or space for the liquid crystal material and a pool connecting with the space through an injection port. To form the sealing member, the array substrate 11 as shown in figure 2 having many switching transistors 21 and electrodes 16 connected to these switching transistors 21 is fixed to a printing stage 22 of a screen printer. The short ring 18 is then connected through a conductor 24 to the printing stage 22 to short the signal portions and gate portions of the switching transistors 21. This leads to the shorting of a grounding portion of the screen printer 22 to the electrodes 16.

When a sealing agent on a screen 26, which has a pattern for printing corresponding to the configuration of the sealing member including the pool described below is squeezed, as shown in figure 3, in the direction of arrow A with a squeegee 28, the sealing agent is printed on the array substrate 11. When the squeegee 28 moves, the screen 26 contacts the array substrate 11, and static electricity is produced by it. However, the short ring 18, which is shorted to the printing stage 22 through the conductor 24 as described above, passes the static electricity to the grounding portion of the screen printer and protects the switching transistors 21 from being damaged.

By such screen printing, a pool 15 (which will be hereinafter referred to as the liquid crystal pool), defined by an extension part of the sealing member and connecting with the space 14 through the liquid crystal injection part 13, is formed on a corner region of the array substrate 11 not covered by the opposite substrate 17, as can be seen in Figure 4.

The array substrate and the opposite substrate are then connected (42) through a common electrode.

Then, the array substrate and the opposite substrate are stacked together (44), and the sealing member is hardened by heating and pressurising (46).

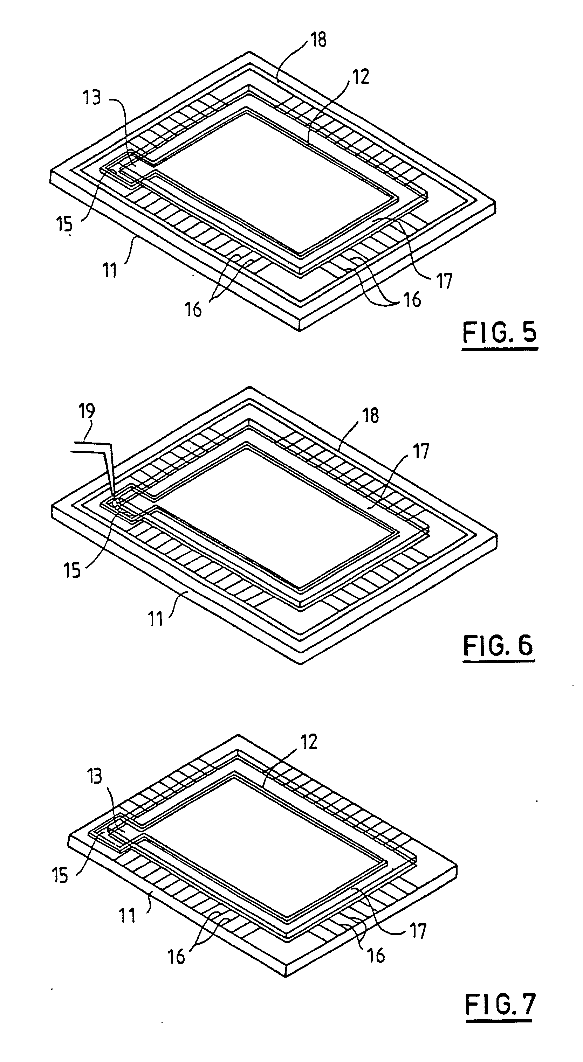

Figure 5 shows a part-finished display assembly which has been processed through such steps.

In the display assembly shown in Figure 5, liquid crystal material 19 is injected (48) into the space between the array substrate 11 and opposite substrate 17, by placing the assembly in a vacuum, accumulating liquid crystal material in the liquid crystal pool 15 by placing a predetermined amount of liquid crystal material into the pool as can be seen in Figure 6, and then restoring the part-finished product to atmospheric pressure, utilising the pressure difference and osmotic pressure to force the liquid crystal into the space between the substrates.

Then, after sealing the liquid crystal injection port 13 (50), the corner section is washed (52).

After this a polariser is attached (54), and the protective film attached to the surface of the polariser is peeled off.

Finally, a so-called scribing is made where the short ring 18 connected to an outer edge portion of the array substrate 11 is cut off together with the outer edge portion of the array substrate 11 itself (56).

Figure 7 shows the appearance of the liquid crystal cell of the liquid crystal display manufactured by such a process.

The restriction of the prior art that the scribing step must be made before the liquid crystal injection is eliminated since the liquid crystal material 19 is injected by a horizontal method using the liquid crystal pool 15 provided on the array substrate 11. Thus, the scribing can be made in the final step and the switching transistors can be protected from being damaged by the static electricity produced when, for example, the protective film is peeled off from the polariser. Thus, the yield of the product is increased and the manufacturing cost is reduced.

The injection of liquid crystal material 19, which can be effected by accumulating a sufficient quantity of liquid crystal 19 in the liquid crystal pool, is quite free from the contamination and deterioration of the liquid crystal material caused by the perpendicular injection method used in the prior art. The sticking of liquid crystal material to useless parts is eliminated, and waste of the liquid crystal material 19 is eliminated.

Since the liquid crystal pool 15 comprises an extension part of the sealing member of the sealing part 12 and is formed simultaneously with the formation of the sealing part, the formation of the liquid crystal pool 15 has little influence on the manufacturing cost.

In should be noted that the invention is not limited to the particular features of the embodiment described above. For example, the drawing shows a rectangular configuration of the liquid crystal pool, but a circular or other configuration is also possible. Any arrangement would be satisfactory if it can accumulate the liquid crystal material to some extent.

In the above embodiment, the array substrate is of larger area than the opposite substrate, but this invention is not limited to this arrangement. It is only necessary that the position where the liquid crystal pool is formed be exposed so that the liquid crystal material can be accumulated. In other words it is possible that, for example, a portion of the opposite substrate in the position corresponding to the liquid crystal pool be removed or the opposite substrate be shifted so that the position is exposed.

In the above embodiment, a large-area and high-density active matrix type liquid crystal display has been described, but this invention can be naturally applied to the other type of liquid crystal display.

Further, in the above embodiment, a screen printer is used as the device for forming the sealing member, but the invention is not limited to this. Any seal forming device may be used as long as it can pass the static electricity produced during seal forming to the grounding part of the seal forming device by being connected to the electrode of the array substrate.

There has been described a liquid crystal display and manufacturing method wherein the scribing process can be made in the last step, and therefore the switching transistors can be prevented from being damaged due to the production of static electricity. In addition, since the injection of liquid crystal material is made with the substrates horizontal and can be effected by accumulating a necessary and sufficient amount of liquid crystal material in the liquid crystal pool, it is completely free from contamination and deterioration of the liquid crystal material caused by the perpendicular injection method. The sticking of the liquid crystal material to undesired parts of the display is eliminated and waste of the liquid crystal material is prevented.

**Claims**

1. A liquid crystal display assembly comprising: a first substrate;
a second substrate, partially overlying the first substrate;
a sealing member defining a space for liquid crystal material between the first and second substrates;
and characterised by a pool for injection of the liquid crystal material, the pool being defined by an extension of the sealing member over a region of the first substrate not covered by the second substrate and the pool connecting with the space between the first and second substrates.

2. A liquid crystal display assembly as claimed in claim 1 wherein the first substrate has a plurality of switching elements attached thereto.

3. A liquid crystal display assembly as claimed in claim 2 comprising a conducting member interconnecting the switching elements for short-circuiting the switching elements.

4. A liquid crystal display assembly as claimed in any preceding claim wherein the first substrate and/or the second substrate are transparent.

5. A liquid crystal display derived from a liquid crystal display assembly as claimed in any preceding claim comprising liquid crystal material in the space between the first substrate and the second substrate.

6. A liquid crystal display comprising:
a first substrate;
a second substrate partially overlying the first substrate;
a sealing member defining a space for liquid crystal material between the first and second substrates;
liquid crystal material in the space between the first and second substrates;
characterised by a pool defined by an extension of the sealing member over the region of the first substrate not covered by the second substrate, the pool connecting with the space between the first and second substrates.

7. A method of manufacture for a liquid crystal display as claimed in claim 5 or claim 6 comprising the step of injecting, with the first and second substrates in a substantially horizontal position, the liquid crystal material into the space between the first and second substrates.

8. A method of manufacture as claimed in claim 7 wherein the step of injection comprises:
placing an assembly as claimed in any of claims 1 to 4 in a vacuum with the first and second substrates in a substantially horizontal position;
placing a predetermined amount of liquid crystal material into the pool;
removing the vacuum, the liquid crystal material thereby being urged into the space between the first and second substrates.

9. A method of manufacture as claimed in claim 7 wherein the liquid crystal display is derived from a liquid crystal display assembly as claimed in claim 3 and comprising the step of removing the conducting member after the step of injection of the liquid crystal material.

10. A method of manufacture for a liquid crystal display comprising the steps of:
forming switching elements on a first substrate;
forming a conducting member on the first substrate, the conducting member interconnecting the switching elements;
forming a sealing member on the first substrate, the sealing member defining a space for liquid crystal material and a pool connecting with the space; stacking a second substrate onto the first substrate, the second substrate covering the space for the liquid crystal material, but leaving the pool at least partially uncovered;

injecting liquid crystal material into the space defined by the sealing member with the first and second substrates in a substantially horizontal position;

removing the conducting member.

11. A method as claimed in claim 10 wherein the step of injection comprises:

placing the stacked first and second substrates in a vacuum in a substantially horizontal position;

placing a predetermined amount of liquid crystal material into the pool;

removing the vacuum, the liquid crystal material thereby being urged into the space between the first and second substrates.

12. A method as claimed in any of claims 9 to 11 comprising the steps of electrically connecting the conducting member to a grounding portion of a device for forming the sealing member prior to forming the sealing member on the first substrate.

13. A method as claimed in claim 12 wherein the device for forming the sealing member is a screen printer, and the conducting member is connected to a printing stage of the screen printer.

14. A method as claimed in any of claims 9 to 13 comprising the step of attaching a polariser to the display assembly and wherein the conducting member is removed after the step of attaching the polariser.

| SUBSTRATE WASHING | 34 |
| ORIENTING FILM FORMING | 36 |
| RUBBING | 38 |
| GAP AND SEAL PORTION FORMING | 40 |
| COMMON ELECTRODE CONNECTING | 42 |
| STACKING TOGETHER | 44 |
| HEATING. PRESSURING. HARDENING | 46 |
| LIQUID CRYSTAL INJECTION | 48 |
| INJECTION PORT SEALING | 50 |
| WASHING | 52 |
| POLARIZER ATTACHING | 54 |
| SCRIBING | 56 |

## FIG. 1

FIG. 2

FIG. 3

FIG. 4

FIG. 5

FIG. 6

FIG.7

| | |
|---|---|
| SUBSTRATE WASHING | 34 |
| ORIENTING FILM FORMING | 36 |
| RUBBING | 38 |
| GAP AND SEAL PORTION FORMING | 40 |
| COMMON ELECTRODE CONNECTING | 42 |
| STACKING TOGETHER | 44 |
| HEATING, PRESSURING, HARDENING | 46 |
| SCRIBING | 56 |
| LIQUID CRYSTAL INJECTION | 48 |
| INJECTION PORT SEALING | 50 |
| WASHING | 52 |
| POLARIZER ATTACHING | 54 |

FIG. 8

FIG. 9

FIG.10

FIG. 11

FIG.12

## DOCUMENTS CONSIDERED TO BE RELEVANT

| Category | Citation of document with indication. where appropriate, of relevant passages | Relevant to claim | CLASSIFICATION OF THE APPLICATION (Int Cl⁵) |
|---|---|---|---|
| X | PATENT ABSTRACTS OF JAPAN, unexamined applications, P field, vol. 10, no. 389, December 26, 1986 THE PATENT OFFICE JAPANESE GOVERNMENT page 50 P 531   * Kokai-no. 61-177 436     (TOSHIBA CORP) * | 1,4-8 | G 02 F 1/1341 |
| A | -- | 10,11 | |
| A | US - A - 4 820 025 (NAKANOWATARI)   * Column 1, line 51 - column     2, line 11; fig. 1-5 * -- | 1,5,6, 10 | |
| A | US - A - 4 443 063 (NISHIYAMA)   * Column 2, line 12 - column     3, line 19 * ---- | 1,4-6, 10 | |

TECHNICAL FIELDS
SEARCHED (Int Cl⁵)

G 02 F

The present search report has been drawn up for all claims

| Place of search | Date of completion of the search | Examiner |
|---|---|---|
| VIENNA | 23-08-1990 | GRONAU |